**Europäisches Patentamt**

**European Patent Office**

**Office européen des brevets**

(19)

(11) Veröffentlichungsnummer: **0 211 837**
**B1**

(12) # EUROPÄISCHE PATENTSCHRIFT

(45) Veröffentlichungstag der Patentschrift:
**30.03.88**

(51) Int. Cl.⁴: **B 60 K 17/34**

(21) Anmeldenummer: **85902032.3**

(22) Anmeldetag: **20.04.85**

(86) Internationale Anmeldenummer:
**PCT/EP 85/00181**

(87) Internationale Veröffentlichungsnummer:
**WO 85/05080 (21.11.85 Gazette 85/25)**

(54) **ALLRADANTRIEB EINES FAHRZEUGES.**

(30) Priorität: **08.05.84 PC /EP84/001 37**

(43) Veröffentlichungstag der Anmeldung:
**04.03.87 Patentblatt 87/10**

(45) Bekanntmachung des Hinweises auf die Patenterteilung:
**30.03.88 Patentblatt 88/13**

(84) Benannte Vertragsstaaten:
**AT DE FR GB**

(56) Entgegenhaltungen:
**WO - A - 84/00057**
**US - A - 1 704 861**
**US - A - 3 656 598**
**US - A - 3 827 520**
**US - A - 4 192 411**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **EHRLINGER, Friedrich, Karl-Weiss-Strasse 15, D-7990 Friedrichshafen (DE)**
Erfinder: **SAILER, Hubert, Drosselweg 26, D-7778 Markdorf (DE)**

(74) Vertreter: **Raue, Reimund, Zahnradfabrik Friedrichshafen AG Löwentaler Strasse 100 Postfach 2520, D-7990 Friedrichshafen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Allradantriebe gemäss dem Oberbegriff des Anspruches 1 und richtet sich insbesondere auf schwere Geländefahrzeuge, Ackerschlepper und Baumaschinen, bei denen mindestens 2 Achsen von einem zentralen Antriebsmotor antreibbar sind und eine selbsttätige, formschlussgebende Schaltkupplung zur bedarfsweisen Antriebsverbindung paralleler Querdifferentiale an sich bekannter Art die Zuschaltung eines sekundären Abtriebsstranges bei Drehzahl- bzw. Drehmomentunterschieden an den jeweiligen Achsen bzw. Rädern vornimmt. (Siehe US-A-3656598, Spalte 1, Zeilen 1-39.) Übliche Schaltkupplungen der erwähnten Art (z. B. DE-A 32 23 076 „System Nospin" oder DE-A 23 32 997 „System Torsen") und ihre bisherige Anordnung haben den Nachteil, dass (z. B. bei Talfahrten) Fahrzustände eintreten können, durch die das Längsdifferential gerade dann, wenn aus Fahr- und Lenksicherheitsgründen grosser Wert auf eine Beibehaltung des Allradantriebes zu legen ist, der Abtrieb der zugehörigen Achse unterbrochen wird, z. B. weil zufällig ein das Öffnen des Kraft- bzw. Formschlusses auslösender Drehzahl- bzw. Drehmomentunterschied zustande gekommen ist. In solchen Fällen könnte es zu unerwünschten Beschleunigungen und auch zu Überlastungen der Bremsen bzw. deren Ausfall kommen. Auch beim häufigen Richtungswechsel bzw. Vor- und Rückwärtsfahren, wie es z. B. bei bestimmten Baumaschinen oft verlangt wird, stört die Selbsttätigkeit. Diesem Nachteil wird zwar durch Einsatz von sensorgesteuerten Schaltkupplungen (z. B. DE-C 30 40 120) zu begegnen versucht, jedoch eignen sich diese nicht für formschlüssige Kupplungen und ergeben diese hohe materielle und auch bezüglich der Feinabstimmung auf die jeweiligen Fahrzeugtypen und Einsatzverhältnisse komplizierte Aufwendungen und bislang noch unbefriedigende Einsatz-Ergebnisse. Auch kann es Einsatzfälle geben (z. B. beim Pflügen), wo die Selbsttätigkeit der Kupplung überhaupt nicht gebraucht wird, und wo dieselbe rasch verschleissen kann. Manuelle Eingriffsmittel zur bedarfsweisen Ein- oder Ausschaltung der selbsttätigen Schaltkupplungsfunktion sind zwar bekannt aus US-A 36 56 598 und US-A 41 92 411, jedoch ist deren fahrzustandoptimaler Einsatz nicht jederzeit sichergestellt.

Die Aufgabe der im Kennzeichen des Anspruches 1 angegebenen Erfindung ist es, für Allradantriebe der angegebenen Gattung Anordnungen vorzuschlagen, welche ohne spezielle Stellglieder usw. zwar völlig selbsttätig schalten, deren an sich selbsttätige Schaltkupplung dennoch während bestimmter Fahrzustände (z. B. Talfahrten, Pflügen, Reversierbetrieb und dgl.) am selbsttätigen Öffnen bzw. Schliessen auf zuverlässige Weise gehindert werden kann. Die Lösung dieser Aufgabe besteht gemäss dem Kennzeichen des Anspruches 1 darin, dass der selbsttätigen Schaltkupplung an sich bekannter Art ein gemeinsames Stellglied mit der Betriebsbremse zugeordnet ist, mit welchem auch dann die Schaltkupplung geöffnet bzw. offen gehalten und/oder am Öffnen gehindert bzw. sie geschlossen werden kann, wenn zwar einmal Drehzahl- bzw. Drehmomentgleichheit an der Schaltkupplung zu erwarten ist, aber dennoch beispielsweise durch Schnellerwerden der Abtriebsseite (z. B. bei Talfahrt), an sich Drehzahlunterschiede zustande kommen könnten. Auf diese Weise wird eine im Normalbetrieb selbsttätige, aber vom Fahrer je nach Bedarf kürzer oder länger frei einsetzbare Abschaltungssperre bzw. Kupplungsüberbrückung geschaffen, die ohne den Aufwand, z. B. elektronischer Drehzahlvergleicher und entsprechender Rechner arbeitet, und welche bei vor- und rückwärts wirksamem Formschluss funktioniert, mit dem eine Bremswirkung über alle Räder sicherstellbar ist. Die erfindungsgemässe Wirkverbindung des Stellgliedes mit der selbsttätigen Schaltkupplung, die normalerweise ohne zusätzliches Steuersystem, praktisch verzögerungslos arbeitet, schafft auf einfache Weise eine individuelle Dosierbarkeit bzw. Aktivierbarkeit. Ohne irgendwelchen zusätzlichen Überwachungsaufwand wird eine Verringerung der Motorbremswirkung (z. B. durch eventuelles ungewolltes Abschalten des betreffenden Abtriebsstranges während kritischer Fahrzustände) mittels eines einfachen, vom Fahrer bei Bedarf aktivierbaren Zusatzstellgliedes, verhütbar. Im Normalbetrieb bleibt die selbsttätige Funktion erhalten, so dass z. B. das Wenden beim Pflügen keinen Extrabedienungshandgriff erfordert.

Indem das Zusatzstellglied mit der Betriebsbremse des Fahrzeuges zusammenlegbar ausgeführt ist, kann die Aktivierung durch ein ohnehin zur Grundausrüstung eines jeden Fahrzeuges erforderliches Ausrüstungsteil (Bremse) in Doppelfunktion gleichzeitig miterfolgen.

Es kommt hierbei nicht unbedingt auf das Gestaltungsprinzip der Schaltkupplung an. Wesentlich ist, dass es sich um ein auf Drehzahlunterschiede ansprechendes Freilaufgesperre handelt, wie es z. B. nach dem oben erwähnten Stand der Technik bekannt ist. Mit einem gegen das selbsttätig wirkende Kupplungsgegenstück aktivierbaren Stellglied kann dieses (z. B. für Strassenfahrt) gegen ungewolltes Einschalten des Allradantriebes gesperrt werden, so dass z. B. Reifenverschleiss vermieden wird. Im Feldeinsatz hingegen erleichtert die Selbsttätigkeit das Wenden.

Vorteilhafte Weiterbildungen der Erfindung sind in den Unteransprüchen beschrieben:
— Die Zusammenlegung der Sperre mit der Rückwärtsgangbetätigung bzw. mit Rückdrehungen (gemäss Anspruch 2) stellt eine besonders wirkungsvolle Sicherung vor Fehlschaltungen dar.
— Indem das Stellglied auf eine Wellenbremse wirkend vorgesehen wird (gemäss Anspruch 3), kann man die Drehzahldifferenz künstlich aufrechterhalten und nutzt die Bremse doppelt, zugleich auch als Stellglied.
— Bei Mitausnutzung des Axialhubes des Bremsbetätigungselementes zur Schaltgliedbetätigung der Schaltkupplung (gemäss Anspruch 4) lassen sich deren eigene Schaltelemente vereinfachen bzw. schwächer dimensionieren.

– Indem die Wellenbremse als alleinige Bremse im durch das Längsdifferential abschaltbaren Abtriebsstrang ausgelegt und angeordnet wird (gemäss Anspruch 5), kann auf zusätzliche Radkopfbremsen verzichtet werden, und die Bremsenbeschädigungsgefahr im Radbereich wird ausserdem reduziert bzw. es wird dort freier Bauraum für Durchfederungs- bzw. Lenkungsbewegungsmöglichkeiten gewonnen.

– Durch Einbeziehung der Schaltkupplung (nach Anspruch 6) und der zugeordneten Wellenbremse in ein gemeinsames Gehäuse (z. B. Schalt- oder Zwischenachsgetriebegehäuse) bietet sich die Möglichkeit, die Wellenbremse als verschleissarme, in Öl laufende Lamellenbremse mit relativ kleinem Durchmesser und minimalem Verschleiss auszugestalten und auch den Ölhaushalt der Schaltkupplung zentral mit dem Getriebe zu überwachen. Hiermit werden speziell für Geländeeinsätze vorteilhafte Bodenfreiheits- und Beschädigungsschutzvorteile erzielt.

– Bei Mitausnutzung der Führungen des Endes der in die Schaltkupplung eintretenden Antriebswelle (nach Anspruch 7) sowohl für den bremsenseitigen Schaltkörper als auch für die Innenbremsscheiben der Wellenbremse ergibt sich eine besonders fertigungs- und montagegünstige Bauweise.

– Bei Abstützung des bremsenseitigen Endes der Abtriebswelle in einem hohlen Abschnitt der Antriebs- bzw. Zwischenwelle (gemäss Anspruch 9) kann eine Vereinfachung und Verkürzung der Wellenlagerung erreicht werden.

– Bei Einbeziehung der Zwischenwelle in einen Nebenabtrieb und Mitverwendung von dessen Ausgangswellenlagerung (nach Anspruch 9) werden nicht nur statische Überbestimmungen und grössere Baulängen vermieden, sondern auch günstigere Lagerkräfteverteilungen erreicht.

Um zu vermeiden, dass die Schaltkupplung im Haupteinsatzbereich allzu häufig ein- und ausschaltet, kann die zweite Abtriebswelle mit deutlichem Vorlauf betrieben werden.

Die Wellenbremse kann entweder nur als Betriebsbremse oder auch als Feststellbremse vorgesehen sein.

Die Erfindung wird anhand der nachfolgend erwähnten Zeichnungen eines Anwendungsbeispieles näher erläutert:

Fig. 1 zeigt ein Anordnungsschema mit der Schaltkupplung im Antriebsstrang zur Vorderachse eines Ackerschleppers.

Fig. 2 zeigt einen für einen solchen Anwendungsfall geeigneten Einbauvorschlag mit in das gleiche Getriebegehäuse einbezogener Kupplung und Wellenbremse als Stellglied.

Fig. 3 zeigt eine Stellgliedvariante ohne unmittelbare Kombination mit einer Bremse, mit der die Schaltkupplung (z. B. für Strassenfahrt) ständig offen gehalten, also der Allradbetrieb ausgeschlossen bleiben kann.

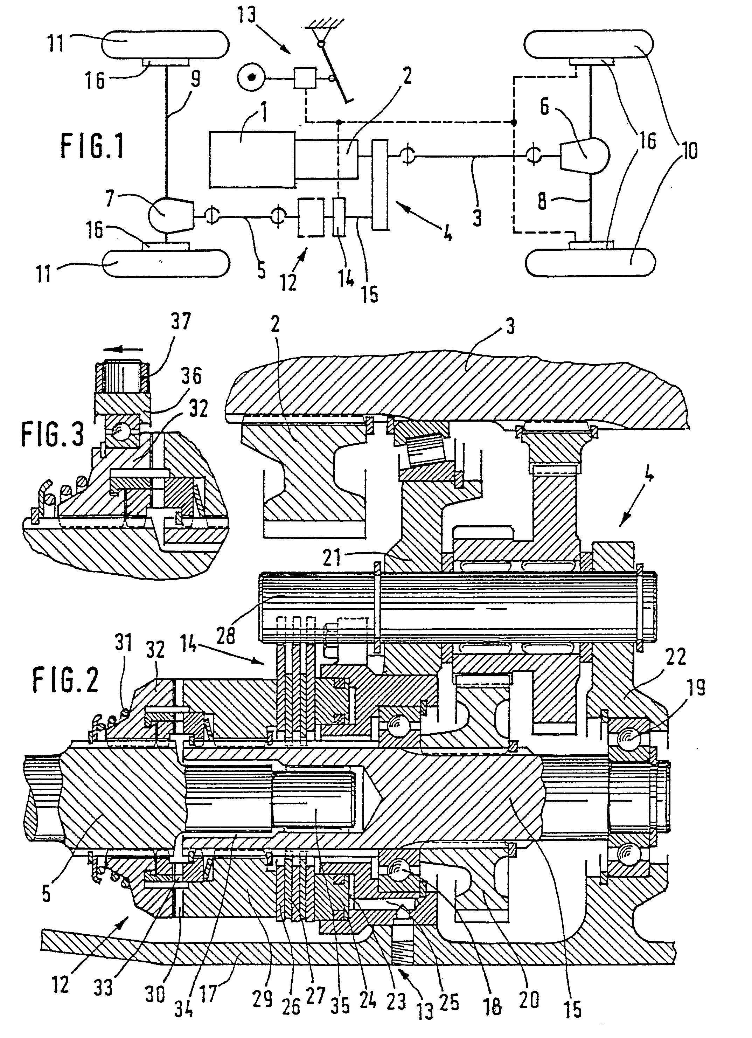

In Fig. 1 ist an der vom Motor 1 über ein Schaltgetriebe 2 angetriebenen Hauptabtriebswelle 3 ein Nebenabtrieb 4 zu einer zweiten Abtriebswelle 5 angeordnet. Beide Abtriebswellen 3, 5 treiben über Querdifferentiale 6, 7 jeweils eine der Achsen 8, 9 und damit die Räder 10, 11 des Fahrzeugs. Die zweite Abtriebswelle 5 weist eine auf Drehzahl- bzw. Drehmomentunterschiede selbsttätig ansprechende Schaltkupplung 12 auf. Diese koppelt bei Drehzahlunterschieden (z. B. beim Wenden) die vordere Antriebswelle 5 selbsttätig vom Motor 1 bzw. Schaltgetriebe 2, so dass bei geringeren Reibungsverlusten und Reifenabrieben leichter gewendet wird. Rollt das Fahrzeug auf schwerem Boden bzw. ergibt sich (z. B. durch Steigungen) Drehzahlgleichheit infolge langsam werdender Vorderachse 9, so gelangt im Normalfall die Schaltkupplung 12 selbsttätig wieder in Eingriff, so dass dann die zweite Abtriebswelle 5 wieder aktiviert ist, ohne dass es eines Bedienungseingriffes oder Fremdimpulses bedarf.

Bei Talfahrten oder Geländeeinsatz etc. ist es nun aber möglich, dass die zweite Abtriebswelle 5 durch die Vorderräder 11 schneller angetrieben wird als durch den bremsenden Motor 1 bzw. das Schaltgetriebe 2. Dann besteht die Gefahr, dass die Schaltkupplung 12 aufgrund ihres von Drehzahl- bzw. Drehmomentunterschieden abhängigen Wirkprinzips selbsttätig wieder ausser Eingriff gerät und damit den Vorderrädern 11 die Bremswirkung von Getriebe 2 und Motor 1 gerade dann verlorengeht, wenn sie zur Aufrechterhaltung eines sicheren Fahrzustandes und auch zur Bremsenschonung dringend nötig wären. Diese Folgen verhindert nun die erfindungsgemässe Zuordnung eines durch den Fahrer bedarfsweise, z. B. vom Betriebsbremssystem 13 einschaltbaren Stellgliedes 14 zur Sperre der selbsttätigen Wirkfunktion der Schaltkupplung 12. Letztere ist bevorzugt auf einer Zwischenwelle 15, die das Zwischengetriebe 4 mit dem Querdifferential 7 der zweiten Abtriebswelle 5 verbindet, eingebaut. Ist die Betriebsbremse 13 gewissermassen auch schon selbst das Stellglied 14 (z. B. wenn eine Wellenbremse vorgesehen ist), wird dasselbe vom Fahrer bei schneller werdendem Fahrzeug ohnehin zum günstigst erforderlichen Zeitpunkt mitaktiviert, wobei ein ungewolltes Öffnen der Schaltkupplung 12 so lange verhindert wird, bis die Bremsung nicht mehr nötig ist. Da auf diese Weise auch eine Minderbelastung aller Reibungsbetriebsbremsen erreicht wird, können diese eventuell schwächer als normal erforderlich dimensioniert sein bzw. kann man auf Radnabenbremsen 16 an den Vorderrädern 11 verzichten.

Verwendet man als Stellglied 14 unmittelbar eine Wellenbremse, hat man noch den Vorteil, gar kein besonderes Stellglied unmittelbar für die Schaltkupplung 12 zu benötigen. Damit ist nämlich von der Antriebsseite her die Beibehaltung bzw. das Zustandekommen von Drehzahlgleichheit und damit ein selbsttätiges Öffnen der Kupplung auf doppelt nutzbare Weise sicherstellbar und ohne zusätzliche Steuerung genau auf die Bedarfszeit begrenzbar. Sinngemäss gleiche Wirkung ergibt sich auch, wenn (gemäss Anspruch 5) das Schaltglied der Schaltkupplung 12 durch ein axial verschiebliches Bremsbetätigungsglied (z. B. durch eine Abstützplatte der Wellenbremse) unmittelbar mit beaufschlagt wird. Das Stellglied 14 kann je nach Einsatzerfordernissen nur für Kurzeinsätze oder auch für Dauer einschaltbar sein, indem entsprechende Hand-Einschaltelemente (z. B. Bedienknopf am Schaltpult) vorgesehen werden.

In Fig. 2 ist die Schaltkupplung 12 unmittelbar mit dem hier als Lamellen-Wellenbremse gestalteten Stellglied 14 zu einer von einem gemeinsamen Gehäuse 17 umgebenen Baugruppe zusammengefasst. Von der Hauptantriebswelle 3, welche hier auch erste Abtriebswelle ist, kommend verläuft der Kraftschluss über das Zwischengetriebe 4, welches hier zur Erlangung eines Vorlaufes der Vorderräder 11 etwas ins Schnelle übersetzend ausgelegt ist, zur Zwischenwelle 15, die normalerweise über die Schaltkupplung 12 mit der zweiten Abtriebswelle 5 trieblich verbunden ist. Die Lagerung 18, 19 der Zwischenwelle 15, welche auch das Abtriebsrad 20 des Zwischengetriebes 4 trägt, ist an Stegen 21, 22 des Gehäuses 17 vorgesehen. Am kupplungsseitigen Steg 21 ist ein die Zwischenwelle 15 umgreifender Druckmittel-Ringzylinder 23 angeflanscht, in welchem ein Ringkolben 24 mittels über Bohrungen 25 herbeiführbarer Druckimpulse von der Betriebsbremsanlage 13 des Fahrzeuges her gegen äussere und innere Reiblamellen 26, 27 des als Wellenbremse ausgebildeten Stellgliedes 14 zur Anlage bringbar ist.

Die dabei verursachte Andrückkraft wirkt gemäss der Zeichnung über einerseits in der Zwischenwelle 15 und andererseits an einem Gehäuse festen Aussenlamellenhalter 28 drehfest anliegende Lamellen 26, 27 weiter gegen einen axial verschieblichen Bremskörper 29, der seinerseits an einem Schaltglied 30 der Kupplung 12 anliegt bzw. dieses selbst bildet.

Im Falle, dass das Stellglied 14 nicht gleichzeitig auch als Bremse ausgestaltet ist (z. B. nach Anspruch 1), kann der Ringkolben 24 auch unmittelbar auf das Schaltglied 30 wirken bzw. dieses selbst bilden und damit ein selbsttätiges Öffnen der Schaltkupplung 12 ausschliessen.

Bei der zeichnungsgemässen Ausgestaltung gelangt das mit der Zwischenwelle 15 drehfeste Schaltglied 30 bei ausreichender Axialkraft vom Stellglied 14 her gegen Federn 31 axialbeweglich mit einem Kupplungsgegenstück 32 in Formschluss, welches mit der zweiten Abtriebswelle 5 drehfest verbunden ist. Dies erfolgt unabhängig davon, ob die an sich bekannte, eigentliche Kupplungsmechanik 33, welche einen Formschluss selbsttätig nur bei Drehzahl- bzw. Drehmomentgleichheit bewirkt, sich gerade in Eingriff befindet oder nicht. Bei der Kupplungsmechanik 33 kann es sich um verschiedenerlei Freilaufsysteme an sich bekannter Art handeln. Der unmittelbare Zusammenbau von Schaltkupplung 12 und Stellglied 14 bzw. Wellenbremse in der dargestellten Form hat noch den Vorteil, dass durch das axiale Ineinandergreifen der Wellen 5 und 15 mittels eines Hohlabschnittes 34 der Zwischenwelle 15 das freie Ende 35 der Abtriebswelle 5 radial geführt ist, ohne dass es dazu eigener Lager und/oder entsprechender Baulängen bedürfte. Das erfindungsgemässe Prinzip wird jedoch auch dann nicht verlassen, wenn eine entsprechend dimensionierte Bremse an anderer Stelle des Antriebsstranges der Schaltkupplung 12 vorgeordnet ist.

In Fig. 3 ist das Stellglied 14 nicht mit einer Bremse unmittelbar zusammengebaut, sondern es kann das Kupplungsgegenstück 32 z. B. durch eine über einen Gleitstein 36 an ihm angreifende Schaltgabe 37 entgegen den Federn 31 ausser Eingriff gehalten werden. Die Schaltgabel 37 wird dabei z. B. durch Rastierungen der gewählten Endlage gehalten. Auch die Betätigung mittels Hilfskraft über einen Stellmotor ist natürlich denkbar.

*Bezugszeichen*

1 Motor
2 Schaltgetriebe
3 Hauptabtriebswelle 3
4 Nebenabtrieb
5 2. Abtriebswelle
6 Querdifferential
7 Querdifferential
8 1. Achse
9 2. Achse
10 Hinterräder
11 Vorderräder
12 Schaltkupplung
13 Betriebsbremse
14 Stellglied
15 Zwischenwelle
16 Radnabenbremsen
17 Gehäuse
18 Lagerung
19 Lagerung
20 Abtriebsrad von 4
21 Gehäusesteg
22 Gehäusesteg
23 Ringzylinder
24 Ringkolben
25 Druckmittelbohrungen
26 Äussere Bremslamellen
27 Innere Bremslamellen
28 Aussenlamellenhalter
29 Bremskörper
30 Schaltglied
31 Federn
32 Kupplungsgegenstück
33 Kupplungsmechanik
34 Hohlabschnitt von 15
35 Ende von 5
36 Gleitstein
37 Schaltgabel

## Patentansprüche

1. Allradantrieb eines Fahrzeuges,
— mit einer zur bedarfsweisen Antriebsverbindung paralleler Querdifferentiale (6, 7) in beiden Drehrichtungen auf Drehzahl- bzw. Drehmomentunterschiede selbsttätig ansprechenden formschlussgebenden Schaltkupplung (12),

— welche bei Drehzahlunterschied zwischen Ein- und Ausgangswellen (5, 15) den über sie geführten Kraftschluss selbsttätig unterbricht,

— wobei ein vom Fahrer kurz oder dauernd aktivierbares Stellglied (14) vorgesehen ist,

— durch welches die selbsttätige Unterbrechung des Kraftschlusses verhindert werden kann, so dass Antrieb und Abtrieb der Ein- und Ausgangswellen (5, 15) unabhängig von den jeweiligen Effektivdrehzahlen an den Abtriebsrädern (11) in Eingriff gehalten bzw. gebracht werden können, dadurch gekennzeichnet, dass das Stellglied (14) mit der Betriebsbremse (13) zusammenwirkend angeordnet ist und gemeinsam mit ihr betätigt werden kann.

2. Antrieb nach Anspruch 1, dadurch gekennzeichnet, dass das Stellglied (14) bei Rückwärtsfahrt immer bzw. ständig aktiviert und die Schaltkupplung (12) geschlossen ist.

3. Antrieb nach Anspruch 1 oder 2, dadurch gekennzeichnet,

— dass das Stellglied (13) der Schaltkupplung (12) auf eine Wellenbremse einwirkt,

— und auf einer zu einem Querdifferential (7) führenden zweiten Abtriebswelle (5 bzw. 15) die Drehzahl- bzw. Drehmomentunterschiede bzw. die Kupplungseingriffe unabhängig von den jeweiligen Effektivdrehzahlen an den über die Schaltkupplung (12) zu- und abschaltbaren Abtriebsrädern (11) des Fahrzeuges während einer Bremsbetätigung auslöst bzw. beibehält.

4. Antrieb nach Anspruch 2 oder 3, dadurch gekennzeichnet, dass die Schaltkupplung (12) ein axial verschiebliches Schaltelement (Ringkolben 24) aufweist, gegen welches bei Betätigung der Bremse (13) ein ebenfalls axial verschieblicher Bremskörper (29) der Wellenbremse zur Anlage bringbar ist.

5. Antrieb nach Anspruch 3, dadurch gekennzeichnet, dass das als Wellenbremse gestaltete Stellglied (12) alleiniges Reiborgan für die Bremsung der ihr nachgeordneten Abtriebsräder (11) ist.

6. Antrieb nach einem der vorstehenden Ansprüche, dadurch gekennzeichnet, dass das Stellglied (14) bzw. die Wellenbremse und die Schaltkupplung (12) in einem gemeinsamen Gehäuse (17) liegen.

7. Antrieb nach einem der vorstehenden Ansprüche, dadurch gekennzeichnet, dass die Schaltkupplung (12) zwei durch Federn (31) zueinander in Eingriff bringbare, axial verschiebliche Schaltkörper (30, 32) aufweist, der in der Wellenbremse nächstgelegene auf einer zur Abtriebswelle (5) koaxialen Zwischenwelle (15) in den gleichen Führungen drehfest gehaltert ist, in denen auch Innenbremsscheiben der Wellenbremse umlaufen.

8. Antrieb nach Anspruch 7, dadurch gekennzeichnet, dass die Zwischenwelle (15) einen zur Aufnahme des bremsenseitigen Endes (35) der Abtriebswelle (5) geeigneten Hohlabschnitt (34) aufweist.

9. Antrieb nach Anspruch 7 oder 8, dadurch gekennzeichnet, dass die Zwischenwelle (15) Ausgangswelle eines Nebenabtriebes (4) von einer Hauptantriebswelle (3) des Fahrzeuges ist und ihre Lagerung nur im Nebenabtrieb (4) hat.

## Claims

1. Four-wheel drive of a vehicle, comprising a positive clutch (12) which automatically responds to speed or torque differences in order to produce drive, as required, to parallel transverse differentials (6, 7) in both directions of rotation and which, in the case of a speed difference between the input and output shafts (5, 15), automatically disengages the frictional connection established via the latter, a control member (14) being provided which can be activated briefly or continuously by the driver and by means of which the automatic disengagement of the frictional connection can be prevented, so that the drive and the output drive of the input and output shafts (5, 15) can be maintained in or brought into engagement independently of the respective actual rotational speeds at the driven gears (11), characterised in that the control member (14) is disposed so as to cooperate with the service brake (13) and can be jointly actuated with the latter.

2. Drive according to claim 1, characterised in that the control member (14) is always or constantly activated and the clutch (12) engaged during reverse travel.

3. Drive according to claim 1 or 2, characterised in that the control member (13) of the clutch (12) acts on a shaft brake and produces or maintains at a second output shaft (5 or 15) leading to a transverse differential (7) the speed or torque differences or the clutch engagements independently of the respective actual rotational speeds at the driven gears (11), which can be engaged and disengaged via the clutch (12), of the vehicle during a brake operation.

4. Drive according to claim 2 or 3, characterised in that the clutch (12) comprises an axially displaceable operating element (annular piston 24), against which a brake member (29), which is also axially displaceable, of the shaft brake can be applied when the brake (13) is actuated.

5. Drive according to claim 3, characterised in that the control member (14), which is formed as a shaft brake, is the sole friction member for braking the driven gears (11), which are subordinate to the control member.

6. Drive according to one of the preceding claims, characterised in that the control member (14) or the shaft brake and the clutch (12) are disposed in a common housing (17).

7. Drive according to one of the preceding claims, characterised in that the clutch (12) comprises two axially displaceable shift members (30, 32), which can be brought into engagement with one another by springs (31) and are non-rotatably secured in the shaft brake next to an intermediate shaft (15) which is coaxial with the output shaft (5) in the same guides in which internal brake discs of the shaft brake also rotate.

8. Drive according to claim 7, characterised in that the intermediate shaft (15) comprises a hollow section (34) suitable for accommodating the end (35), at the brake side, of the output shaft (5).

9. Drive according to claim 7 or 8, characterised in that the intermediate shaft (15) is the output shaft of an auxiliary output drive (4) from a main drive shaft (3) of the vehicle and is only mounted in the auxiliary output drive (4).

**Revendications**

1. Transmission à toutes roues motrices pour un véhicule,
— comportant un embrayage à engagement positif (12) répondant automatiquement à des différences de vitesse de rotation ou de couple pour relier deux différentiels transversaux (6, 7) facultativement et dans les deux sens de rotation,
— ledit embrayage interrompant automatiquement, en cas de différence de vitesse de rotation, la liaison motrice établie par lui entre des arbres d'entrée et de sortie (5, 15),
— et comportant un organe de commande (14) pouvant être actionné de manière brève ou durable par le conducteur,
— ledit organe de commande permettant d'empêcher l'interruption automatique de ladite liaison motrice, de sorte que l'entraînement de ou par les arbres d'entrée et de sortie (5; 15) peut être maintenu ou établi indépendamment des vitesses de rotation respectives des roues motrices (11), caractérisée en ce que l'organe de commande (14) est agencé pour coopérer avec le frein de service (13) et peut être actionné en commun avec celui-ci.

2. Transmission selon la revendication 1, caractérisée en ce que, durant la marche arrière, l'organe de commande (14) est toujours et constamment activé et l'embrayage (12) est enclenché.

3. Transmission selon la revendication 1 ou 2, caractérisée en ce que l'organe de commande (14) de l'embrayage (12) agit sur un frein d'arbre et, pendant un actionnement du frein, déclenche ou maintient, sur un second arbre de sortie (5 ou 15) conduisant à un différentiel transversal (7), les différences de vitesse ou de couple et les liaisons par embrayage, indépendamment des vitesses effectives respectives des roues motrices (11) dont l'entraînement est commandé par cet embrayage (12).

4. Transmission selon la revendication 2 ou 3, caractérisée en ce que l'embrayage (12) comporte un élément de commande (piston annulaire 24) qui coulisse axialement et contre lequel peut s'appuyer un corps (29) du frein d'arbre, ce corps coulissant également axialement en cas d'actionnement du frein (13).

5. Transmission selon la revendication 3, caractérisée en ce que l'organe de commande (14) constitué par un frein d'arbre est le seul organe à friction pour le freinage des roues motrices (11) dépendant de lui.

6. Transmission selon l'une des revendications précédentes, caractérisée en ce que l'organe de commande (14) ou frein d'arbre et l'embrayage (12) se trouvent dans un carter commun (17).

7. Transmission selon l'une des revendications précédentes, caractérisée en ce que l'embrayage (12) comporte deux corps d'embrayage (30, 32) coulissant axialement, qui sont agencés pour être mis en prise mutuelle par des ressorts (31), et dont le plus proche du frein d'arbre est maintenu solidaire en rotation d'un arbre intermédiaire (15) coaxial à l'arbre de sortie (5) par des glissières dans lesquelles coulissent aussi les disques intérieurs du frein d'arbre.

8. Transmission selon la revendication 7, caractérisée en ce que l'arbre intermédiaire (15) comporte un tronçon creux (34) pour recevoir l'extrémité (35) de l'arbre de sortie (5) située du côté du frein.

9. Transmission selon la revendication 7 ou 8, caractérisée en ce que l'arbre intermédiaire (15) est un arbre de sortie d'une prise de mouvement auxiliaire (4) sur un arbre de transmission principal (3) du véhicule et n'est porté par des paliers que dans cette prise de mouvement auxiliaire (4).

FIG.1

FIG.3

FIG.2